# EUROPEAN PATENT APPLICATION

(11) **EP 3 078 904 A1**
(43) Date of publication of application: **12.10.2016**
(21) Application number: 16160097.8
(22) Date of filing: 14.03.2016
(51) Int. Cl.: F21V 8/00

(54) **LINEAR LIGHT GUIDE, LINEAR LIGHT GUIDE STRUCTURE, PLANAR LIGHT GUIDE STRUCTURE, AND ILLUMINATING DEVICE**

(30) Priority: 08.04.2015 JP 2015079127
(71) Applicant: Furukawa Electric Co., Ltd., Chiyoda-ku Tokyo 100-8322 (JP)
(72) Inventor: YAMAMOTO, Syunji, Tokyo, Tokyo 100-8322 (JP); INOUE, Syouta, Tokyo, Tokyo 100-8322 (JP); KUBOTA, Tetsuji, Tokyo, Tokyo 100-8322 (JP)
(74) Representative: Horn Kleimann Waitzhofer Patentanwälte PartG mbB

(57) **Abstract**

A linear light guide 1 is mainly made up of a side emission type optical fiber 3, a flexible resin sheet, etc. The side emission type optical fiber is flexible and allows light entering a core to diffuse from its side via a clad. The flexible light resin sheet 5 is preliminarily formed into a form in conformity to an external form of the side emission type optical fiber 3. The flexible light resin sheet 5 is formed from, e.g., a microcellular structure resin sheet. A portion covered with the flexible light resin sheet 5 in an outer circumferential surface of the side emission type optical fiber 3 is defined as a covered section, while a portion not covered with the flexible light resin sheet 5 to expose the outer circumferential surface of the side emission type optical fiber 3 is defined as an opened section 9. In this case, it is desirable that the covered section 7 is formed in a half or more of a circumferential length of the side emission type optical fiber 3.

## Description

### Technical Field

The present invention relates to a linear light guide, a linear light guide structure, a planar light guide structure, and an illuminating device using the linear light guide structure, which are used for, e.g., interior illumination of automobile, etc.

### [Background Art]

Heretofore, a linear light-emission member has been used in, e.g., a vehicular illuminating device or the like. In such a light-emission member, light is allowed to enter by a light source from one end of a linear light guide body to enable the light guide body to become luminescent (see e.g., patent literatures 1 to 2).

Further, in order to allow light to enter efficiently a linear body (optical fiber) like this, such a device has been disclosed that a planar lens made of a light-emitting diode and an outer circumferential surface in the vicinity of an end face of optical fiber were covered with a reflective member (see a patent literature 3).

### [Citation List]

### [Patent Literature]

[Patent Literature 1]: Japanese unexamined patent application publication No. 2014-172449
[Patent Literature 2]: Japanese unexamined patent application publication No. 2014-172450
[Patent Literature 3]: Japanese unexamined patent application publication No. 2014-105563

### [Summary of Invention]

### [Technical Problem]

A linear light guide body lowers in illumination intensity (illuminance) with increasing distance from a light source. Accordingly, its enabled length is limited. Therefore, it has been difficult to use a long linear light guide body with a desired illumination intensity kept. Further, it has been difficult to increase its illumination intensity as a whole.

The present invention is made with the view of such problems and aims at providing a linear light guide, etc. which enables longer light-emission length to be obtained or an illumination intensity to be improved.

### [Solution to Problem]

In order to attain the above-mentioned object, the following inventions are provided.

A first invention is a linear light guide characterized by including a covered section formed by covering part of a circumferential length on an outer circumferential surface of side emission type optical fiber with a light reflecting flexible resin sheet, and an opened section not covered with the flexible resin sheet to expose the outer circumferential surface of the side emission type optical fiber.

The above side emission type optical fiber may be a side emission type multi-core optical fiber. As the side emission type multi-core optical fiber, side emission type multi-core plastic optical fiber or bundle type multi-core plastic optical fiber may be applicable.

The above covered section and the above opened section may be parallel and continuously formed in a longitudinal direction of the side emission type optical fiber.

It is preferable that the above covered section is formed in a half or more of a circumferential length on an outer circumference of the above side emission type optical fiber and a circumferential opening width of the above opened section is a half or less of the circumferential length in the outer circumference of the above side emission type optical fiber.

The above flexible resin sheet is spirally wound around the outer circumferential surface of the above side emission type optical fiber so as to form gaps at predetermined intervals on the outer circumferential surface of the side emission type optical fiber and both the above opened section and the above covered section may be spirally, alternately and continuously formed in the longitudinal direction of the above side emission type optical fiber.

In addition, the present invention can also make a linear light guide characterized in that side emission type optical fiber is wound around an outer surface of a transparent rod body so that the side emission type optical fiber is allowed to be in close contact with the outer surface of the transparent rod body to form a structure in this manner, and then the structure thus formed is provided with a covered section formed by covering part of a circumferential length of the above structure with a light reflecting flexible resin sheet and an opened section not covered with the above flexible resin sheet to expose an outer circumferential surface of the above structure.

In this case, the above flexible resin sheet may be spirally wound around the outer circumferential surface of the above structure so as to form gaps at predetermined intervals on the outer circumferential surface of the structure and both the above opened section and the above covered section may be spirally, alternately and continuously formed in a longitudinal direction of the above transparent rod body.

At least part of contact portions between the above flexible resin sheet and the above side emission type optical fiber may be allowed to adhere to each other by a light transmissive adhesive agent or is filled with light transmissive oil. In addition, an entire contact portions between the above flexible resin sheet and the above side emission type optical fiber may be allowed to adhere to each other by the light transmissive adhesive agent.

A core material of the above side emission type optical fiber may be any one of PMMA-based resin, polycarbonate resin, modified PC resin, norbornane-based resin, or copolymerized PMMA resin that is copolymer resin of PMMA resin and isopropyl alcohol resin, while a clad material of the above side emission type optical fiber may be fluorine resin.

The core material of the above side emission type optical fiber can be silica-based glass, while the clad material of the above side emission type optical fiber can be fluorine resin or also silica-based glass.

The above flexible resin sheet may be a thermoplastic microcellular foam resin sheet made of any one of PET resin containing fine foams, PC resin, flame retardant PC resin, or acryl resin.

The above flexible resin sheet may be produced by stretching a resin sheet containing at least inorganic particles in polyester or a resin sheet containing resin incompatible with polyester, and may be a film like resin sheet containing fine foams inside itself.

The above side emission type optical fiber may be one where phosphor particulates of any one of blue phosphor particulates, green phosphor particulates, yellow phosphor particulates, or red phosphor particulates are dispersed in the core or clad of the above side emission type optical fiber.

Further, the present invention can make a linear light guide characterized in that a light reflecting flexible resin sheet may be wound around the whole of an outer circumference of a rod body so that the light reflecting flexible resin sheet covers the whole of the outer circumference of the rod body, and then side emission type optical fiber is spirally wound around the outer circumferential surface of the flexible resin sheet so that the side emission type optical fiber is allowed to be in close contact with the outer circumferential surface of the flexible resin sheet.

In this case, the structure formed by winding the above side emission type optical fiber around the above rod body may be provided with a covered section formed by covering part of a circumferential length of the structure with a light reflecting flexible resin sheet, and an opened section not covered with the flexible resin sheet to expose an outer circumferential surface of the above structure.

According to the first invention, the outer circumferential surface of the side emission type optical fiber is covered with the light reflecting flexible resin sheet so as to open part of the outer circumferential surface of the side emission type optical fiber, and therefore light can be prevented from leaking from portions other than the opened section and by an reflecting action due to the flexible resin sheet wound around the covered section, the attenuation of the light passing through the linear light guide can be decreased as well as enabling the light to gather in the opened section. Therefore, an illumination intensity of linear illumination is improved and thereby the light can reach more distant portions, thus enabling a long light-emission length to be obtained.

Further, by using the multi-core optical fiber, an effective cross-sectional area of the fiber core is increased and thereby a larger-diameter linear light guide can be obtained. Besides, by using the multi-core optical fiber formed by bundling a plurality of optical fibers, this bundled fiber becomes easy to be bent even if enlarging an outer diameter of the whole of the bundled fiber, and hence the bundled fiber is bent into a desired form to become usable. Though it is desirable that the multi-core optical fiber is multi-core plastic optical fiber, multi-core silica glass optical fiber is also usable.

Moreover, by forming the opened section into a linear form in parallel with the longitudinal direction of the side emission type optical fiber, a light-emission section can be formed into a linear form. That is, the linear illumination can be obtained.

Further, by forming the covered section in a half or more of the circumferential length of the side emission type optical fiber, a quantity of leak light in an outer circumferential portion of a cross-sectional surface of the above optical fiber in the covered section is decreased to enable light reflection to be enhanced, and therefore light can be efficiently extracted from the opened section in comparison with a case where the covered section is formed in a half or less of the circumferential length of the above optical fiber. Besides, when the flexible resin sheet is formed in conformity to an external form of the side emission type optical fiber, the side emission type optical fiber can be easily held by the flexible resin sheet.

Moreover, by forming spirally the opened section in the longitudinal direction of the side emission type optical fiber, the light-emission section can be spirally formed, and also by forming spirally the opened section in the longitudinal direction of the outer circumferential surface of the transparent rod body around which the side emission type optical fiber is spirally wound so that the side emission type optical fibers is allowed to be in close contact with each other, the light-emission section can be spirally formed in a similar fashion. Accordingly, the illumination with a high design quality can be obtained.

Further, in the present invention, the flexible resin sheet may be wound around a structure formed by winding the side emission type optical fiber around a transparent rod body instead of covering the side emission type optical fiber with the flexible resin sheet. Thus, in the same manner as the case where the flexible resin sheet is directly wound around the side emission type optical fiber, a sufficient illumination intensity can be ensured over a longer distance. Further, a large-diameter linear light guide can be obtained.

Furthermore, contact portions between the flexible resin sheet and the side emission type optical fiber are allowed to adhere to each other by a light transmissive adhesive agent, and thereby light can be efficiently reflected by the flexible resin sheet.

Moreover, as the core material of the side emission type optical fiber, in substitution for PMMA (Polymethyl methacrylate)-based resin that is low in heat resistance, any one of polycarbonate (PC) resin, modified PC resin, norbornen-based resin, or copolymerized PMMA resin that is copolymer resin of PMMA resin and isopropyl alcohol resin is used, and thereby a linear light guide high in heat resistance whose heatproof temperature is 120 degrees C or more can be obtained.

Here, since plastic optical fiber high in heatproof temperature is prone to become larger in transmission loss, the plastic optical fiber needs to be selected in consideration of a balance between the heatproof temperature and the transmission loss. As the core material of the side emission type optical fiber, the above plastic material is normally used. The silica-based glass can be, however, used, too. Besides, for a clad material, silica-based glass, etc. besides fluorine resin can be used.

Further, as the flexible resin sheet, when any one of sheets made of PET (Polyethyleneterephthalate) resin containing fine foams, PC resin, flame retardant PC resin, or microcellular structure resin that is a foam of acryl resin is used, a high reflectance can be obtained. Further, the flexible resin sheet includes flexibility, and hence can be transformed easily in conformity to a form of the side emission type optical fiber. Furthermore, when shaping the flexible resin sheet in conformity to an external form of the side emission type optical fiber, the side emission type optical fiber can be easily fitted into the flexible resin sheet. Accordingly, the side emission type optical fiber can be stably held while preserving appropriate holding force. Moreover, when the side emission type optical fiber is the plastic optical fiber, a surface of the side emission type optical fiber can be prevented from being scratched.

Furthermore, as the flexible resin sheet, a film like resin can be used which is made by stretching a polyester resin sheet containing inorganic particles or resin incompatible with polyester, and contains fine foams inside itself. Thus, the flexible resin sheet may be a thin film like one.

Phosphor particulates of any one of the blue phosphor particulates, the green phosphor particulates, the yellow phosphor particulates, and the red phosphor particulates are dispersed in the side emission type optical fiber and thereby a desired color can become luminescent, so that such both effects can be obtained as an excellent side emission property and a color-producing effect of changing a luminescent color.

Further, in the present invention, the light reflecting flexible resin sheet can be wound around the rod body so that the light reflecting flexible resin sheet covers the whole of the outer circumferential portion of the rod body, and the side emission type optical fiber can be spirally wound around the outer circumferential surface of the flexible resin sheet so that side emission type optical fiber is allowed to be in close contact with the outer circumferential surface of the flexible resin sheet. Also in this manner, light from the side emission type optical fiber can be emitted efficiently in the outer circumferential direction of the side emission type optical fiber. Further, a large-outer-diameter linear light guide can be obtained.

In this case, the flexible resin sheet is provided, as described above, on the outer circumference of the rod body around which the side emission type optical fiber is wound and part of the outer circumference is opened, and thereby light can be prevented from leaking from portions other than the opened section. A rod body around which a light reflecting flexible resin sheet is wound can be used. In this manner, the side emission type optical fiber can be wound around the outer circumferential surface of the flexible resin sheet so that the side emission type optical fiber is allowed to be in close contact with the outer circumferential surface of the flexible resin sheet.

A second invention is a linear light guide structure characterized in that the linear light guide according to the first invention is housed in a flexible soft resin or rubber case. By using the structure like this, a linear light guide can be obtained,

According to the second invention, since the linear light guide is housed in the case, the linear light guide structure can be easily arranged at a desired position. Further, by arranging the flexible resin sheet between the case and a side emission type optical fiber, light emitted from the side emission type optical fiber is reflected by the flexible resin sheet to prevent the light from being absorbed by the case, and then an intensity of the light extractable can be regulated while controlling an area of the opened section. Furthermore, when the flexible resin sheet arranged in the case is made of a foam of a microcellular structure resin sheet containing fine foams, the flexible resin sheet can play a role of a cushioning layer. Accordingly, a surface scratch caused by contact between the linear light guide and the case can be prevented from occurring.

A third invention is a planar light guide structure characterized in that a plurality of the linear light guides according to the first invention is allowed to adhere to each other to form a planar body, and then each of the opened section in the plurality of the linear light guides is formed so that each of the opened sections face uniformly to a normal direction of the planar body. By using the structure like this, the planar structure can be obtained.

Further, the third invention is a planar light guide structure characterized in that the linear light guides according to the first invention, are used to provide a plurality of the above side emission type optical fiber side by side, and then the above flexible resin sheet is formed with depressed portions corresponding to the plurality of the side emission type optical fibers to arrange the plurality of the above side emission type optical fibers in the depressed portions of the above flexible resin sheet.

According to the third invention, the planar light guide can be easily formed using the linear light guides.

The flexible resin sheet is formed with the depressed portions and then the side emission type optical fibers are arranged along the depressed portions, thus making it easy to position the side emission type optical fibers.

A fourth invention is an illuminating device characterized by including the linear light guide structure according to the second invention and a light source, and by operating the light source to allow predetermined wavelength light to enter at least one end face in the longitudinal direction of the side emission type optical fiber in the above linear light guide structure in conformity to an optical axis of the side emission type optical fiber, and then to be extracted from the above opened section. In substitution for the light guide structure used for the fourth embodiment, the linear light guide may be directly used as is covered with high reflection flexible resin without housing the linear light guide in the flexible soft resin or rubber case with the linear light guide covered.

In this case, a reflective coating may be formed in the other end face in the longitudinal direction of the above side emission type optical fiber.

Further, an illuminating device is characterized by including the linear light guide structure according to the second invention, and a light source, and by operating the light source to allow predetermined wavelength light to enter both end faces in a longitudinal direction of a side emission type optical fiber of the above linear light guide structure in conformity to an optical axis of the side emission type optical fiber and then extract the light from the above opened section. As described above, in the above illuminating device, the light source may be operated to allow the predetermined wavelength light to enter one of one end face and both the end faces, that is, at least one end face in a longitudinal direction of the above light guide structure in conformity to the optical axis of the side emission type optical fiber, and it may be determined depending on a length of the linear light guide and required luminescence whether the light source is placed at only one end or at both the ends.

The end face of the side emission type optical fiber and the above light source may be allowed to contact with each other to be directly and optically connected with each other.

A lens is arranged between the end face of the above side emission type optical fiber and the above light source, and the end face of the side emission type optical fiber and the above light source may be optically connected via the lens. By thus arranging the lens, light can be allowed to enter efficiently the linear light guide and at the same time heat generated from the light source can be efficiently absorbed.

The above illuminating device may be an illuminating device for ornamental use.

The above illuminating device may be an illuminating device for visible guide sign.

The above illuminating device may be an illuminating device for the automobile interior..

According to the fourth invention, an illuminating device that is capable of emitting more luminous light than ever before and is longer can be obtained.

Further, when light is allowed to enter from one end, the light can be prevented from leaking from the other end by forming a reflective coating at the other end.

Furthermore, by allowing light to enter from both ends, an illuminating device that is capable of emitting more luminous light and is longer can be obtained.

Moreover, the light source and the end face of the side emission type optical fiber are allowed to contact with each other and then light is allowed to enter directly the side emission type optical fiber.

The illuminating devices like these are applicable to, e.g., the illuminating device for ornamental use, the illuminating device for visible guide sign, the illuminating device for automobile interior, etc.

### [Effects of the Invention]

According to the present invention, the linear light guide, the linear light guide structure, the planar light guide structure, and the illuminating device using the linear light guide structure, etc., which are capable of obtaining a longer light-emission length, can be provided.

### [Brief Description of Drawings]

Fig. 1 is an exploded perspective view illustrating a linear light guide 1.
Fig. 2 is an assembly perspective view illustrating the linear light guide 1.
Fig. 3 is a cross-sectional view vertical to a longitudinal direction of the linear light guide 1.
Fig. 4(a) is a cross-sectional view vertical to a longitudinal direction of a linear light guide 1a.
Fig. 4(b) is a cross-sectional view vertical to a longitudinal direction of a linear light guide 1b.
Fig. 5 is a perspective view illustrating a linear light guide 1c.
Fig. 6(a) is a perspective view illustrating a linear light guide 1d.
Fig. 6(b) is a perspective view illustrating a linear light guide 1e.
Fig. 7 is a perspective view illustrating a linear light guide 1h.
Fig. 8(a) is a perspective view illustrating a linear light guide If.
Fig. 8(b) is a perspective view illustrating a linear light guide 1g.
Fig. 9(a) is a perspective view illustrating a linear light guide structure 10.
Fig. 9(b) is a cross-sectional view vertical to a longitudinal direction of the linear light guide structure 10.
Fig. 10 is a perspective view illustrating a planar light guide structure 20.
Fig. 11 is a perspective view illustrating a planar light guide structure 20a.
Fig. 12(a) is a view illustrating an illuminating device 30.
Fig. 12(b) is a view illustrating an illuminating device 30a.
Fig. 13(a) is a view illustrating an illuminating device 30b.
Fig. 13(b) is a view illustrating an illuminating device 30c.
Fig. 14 is a graph illustrating a relationship between distance from light source and illumination intensity.

### [Description of Embodiments]

### <Linear Light Guide>

### [First Embodiment]

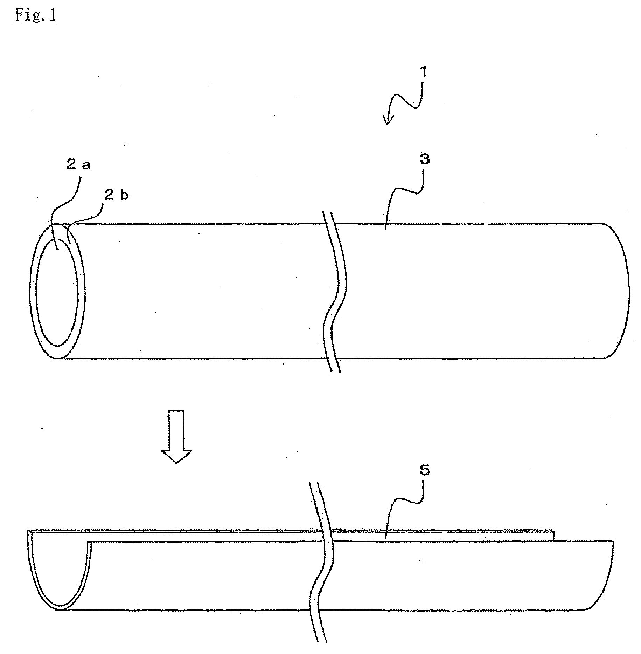

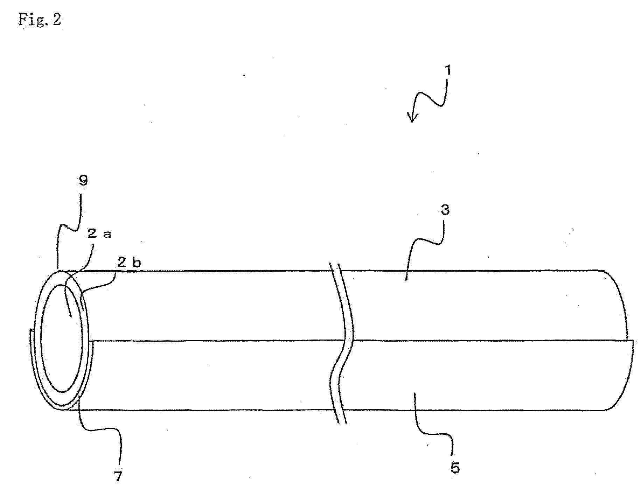

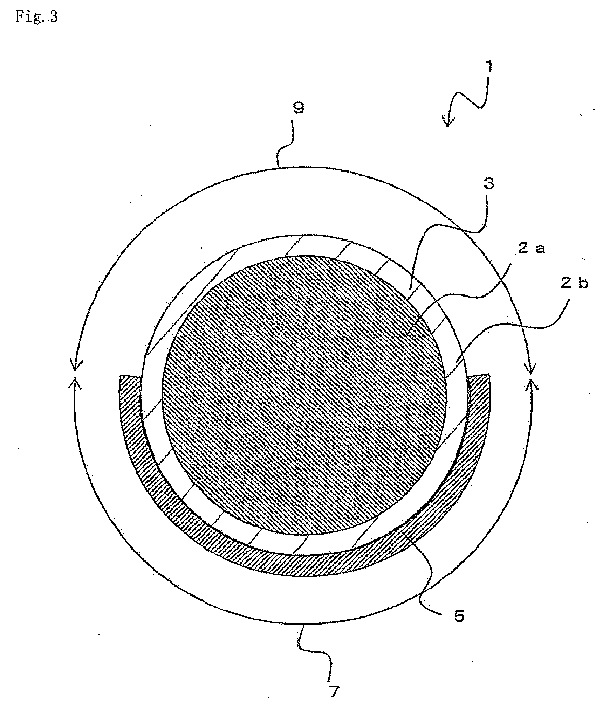

Hereunder is a description on a linear light guide 1 according to an embodiment of the present invention. Fig. 1 is an exploded perspective view of the linear light guide 1, Fig. 2 is an assembly perspective view of the linear light guide 1, and Fig. 3 is a cross-sectional view vertical to a longitudinal direction of the linear light guide 1.

The linear light guide 1 is mainly made up of side emission type optical fiber 3, a flexible resin sheet 5, etc. The side emission type optical fiber 3 is flexible and allows light entering a core 2a to be radiated from a lateral side via a clad 2b.

As the side emission type optical fiber 3, a side emission type plastic optical fiber can be used which is optical fiber for transmitting visible light over a short distance, inexpensive, thick in core diameter, easy to be connected with a device that should be connected with the optical fiber, and comparatively light for its diameter. In this instance, as a core material, polymethylmethacrylate resin (PMMA resin) and polycarbonate resin (PC resin) are used in consideration of high refractive index, transparency, strength, etc. When requiring heat resistance, it is desirable that PC resin is used in substitution for PMMA resin. As described above, as the core material of the side emission type optical fiber 3, any one of PMMA -based resin, polycarbonate resin, modified PC resin, norbornane resin, or copolymerized PMMA resin that is a copolymer resin of PMMA resin and isopropyl alcohol can be used.

Further, as a clad material by ordinary, fluorine resin (fluoride polymer) with a low refractive index is used. In addition, when a clad layer is thinned, a trend to allow leaking light from the core to be intensive is exhibited, and therefore in order to extract light from a lateral side as is done in the present invention, it is desirable that the clad layer is thin. In addition, it is possible that the side emission type plastic optical fiber is made up of only PMMA that is the core material, and thereby an air clad is made. In this manner, when the optical fiber is made up of only a core material, it is desirable that a surface of the optical fiber is roughened for the purpose of improving an efficiency of extracting light from a surface.

As the side emission type plastic optical fiber like this, a multimode fiber that is an SI type (step-index type) and uses PMMA excellent in optical transparency is desirable as the core material in point of cost, etc. Here, an optical fiber whose core material and clad material are made up of silica-based glass can be used as the side emission type optical fiber. Optical fiber made by using silica-based glass for its core material and fluorine resin for its clad material can be also used.

Further, as the side emission type plastic optical fiber, e.g., such plastic optical fiber can be used that a surface of its core 2a is roughened to scatter light and then extract the light outward.

Here, when roughening an interface between the core 2a and the clad 2b, part of light transmitting inside the side emission type plastic optical fiber is omnidirectionally emitted from a surface of the clad 2b in various directions due to unevenness of the interface. Besides, while part of the light that has reached a roughened part is repeating reflection in the interface between the core 2a and the clad 2b, a reflecting angle in the roughened part of the interface varies and then when the reflecting angle in the roughened part of the interface varies to exceed an inside transmittable angle, the light is emitted from the clad layer.

By using the side emission type plastic optical fiber like this, the light can be efficiently extracted from the lateral side (circumferential surface) of the side emission type plastic optical fiber. In addition, when extracting the light from part of the clad 2b, such side emission type plastic optical fiber can be used that an outer circumferential portion at a given position on a circumference of the clad 2b is varied in thickness to remove part of the clad layer and then an uneven shape reaching part of the core 2a is formed in the clad 2b.

### [Side Emission Type Plastic Optical Fiber Formed with Unevenness in Interface between Core and Clad]

As a method for forming the unevenness by roughening the interface between the core 2a and the clad 2b, there are a hot stamping method for pressurizing the surface of the clad 2b of the side emission type plastic optical fiber by a heated hard material, an ultrasonic stamping method using an ultrasonic welder, and alternately, a blast forming method for making a light leaking portion by spraying water and a blast agent. Further, there is an etching method for dissolving and removing the clad 2b in a chemical fashion. This etching method can remove an entire circumference of a surface of the core 2a. This method, however, requires a long processing time to make productivity poor, and therefore the hot stamping method and the blast method are employed for practical purpose. Here, a method for obtaining a side emission property is not confined to the above mentioned methods, and the interface between the core 2a and the clad 2b may be roughened by other methods. By performing the above methods, the side emission type plastic optical fiber whose interface between the core 2a and the clad 2b are roughened to form the unevenness in the interface can be obtained.

### [Side Emission Type Plastic Optical Fiber Provided with Light Diffusing Layer between Core and Clad]

Alternatively, as a method other than the methods for forming the unevenness by roughening the interface between the core 2a and the clad 2b, plastic optical fiber provided with a light diffusing layer between the core 2a and the clad 2b in an outer circumference of the core 2a may be usable or an plastic optical fiber in which fine diffusing agent are dispersed in the clad 2b may be also usable.

Here, by forming an incommensurate structure in the interface (outer circumference of the core 2a) between the core 2a and the clad 2b or providing a light diffusing layer in the clad 2b in the outer circumference of the core 2a, a side emission nanostructure can be formed. Specifically, the compatibility in the interface between the core 2a and the clad 2b is lowered to allow the core 2a and the clad 2b to be in close contact with each other, and thereby the incommensurate structure can be formed in the interface between the core 2a and the clad 2b, Accordingly, it becomes possible that light is extracted from the surface of the clad 2b by light diffusion caused by this incommensurate structure.

Further, especially, an aligned crystal structure is produced by a specific stretching processing and thereby light diffusion is caused and as a result, it becomes possible to achieve an improvement in side emission performance. As light diffusing resin for forming the light diffusing layer, it is desirable to use crystalline and semitransparent resin.

As such resin, the following resins can be used for example, polyethylene; a copolymer of ethylene and vinyl acetate; a copolymer of ethylene and ethylacrylate; polyvinyl chloride; thermoplastic polyurethane; an elastomer composed of styrene/butadiene block copolymers; a copolymer of vinylidenefluoride and hexafluoropropene; a copolymer of vinylidenefluoride, hexafluoropropene and tetrafluoroethylene; a copolymer of vinylidenefluoride and chorotrifluoroethylene; silicon rubber; etc. In this instance, a twisting processing in addition to the stretching processing is performed and thereby a microbending diffusion is caused in the interface, enabling light scattering in the incommensurate portion in the interface between the core 2a and the clad 2b to be increased.

### [Side Emission Type Plastic Optical Fiber Formed with Light Diffusing Layer Dispersed with Light Diffusing Material in Clad]

As a method for forming a diffusing layer in which an inorganic light diffusing material is dispersed in the clad 2b, the inorganic light diffusing agent on the order of 1 to 5 µm in particle diameter, e.g., barium sulfate, titanium oxide, zinc sulfate, calcium carbonate, silica, alumina, talc, etc. can be added in the clad 2b. Besides, organic particulates such as spherical silicon resin which is incompatible with the clad 2b and is different in refractive index from that of the clad 2b can be added in substitution for the inorganic light diffusing agent. As the organic particulates, silicon particulates are particularly often used.

Here, the diffusing layer may be formed in the whole of the clad 2b, while the clad 2b may be formed in such a manner as to be divided into a layer containing the diffusing agent and a layer not containing the same. This diffusing layer may be formed not only in the clad 2b but in the core 2a and then can be appropriately formed in any one of the clad 2b and the core 2a. Here, it is generally desirable to form the diffusing layer in the clad 2b in order to extract light from the lateral side of optical fiber. The diffusing layer may be, however, formed also in the core 2a to increase an amount of the light passing from the core 2a through the clad 2b by scattering of light caused by the diffusing material.

Here, as a polymer used for the clad material for forming the clad 2b, a polymer mainly containing vinylidenefluoride is desirable. For example, a copolymer of vinylidenefluoride and tetrafluoroethylene whose ratio of vinylidenefluoride is 60 % to 99 %; polyvinylidenefluoride; a copolymer of vinylidenefluoride and hexafluoropropene; a copolymer of vinylidenefluoride, tetrafluoroethylene and hexafluoropropene; a copolymer of vinylidenefluoride, trifluoroethylene and hexafluoroacetone; etc. can be used.

In addition, as the side emission type optical fiber 3, the well known side emission type plastic optical fiber can be used, and e.g., "RAY MILKY FLEX 35" (trade name) made by 3M Japan Limited, or the like can be used. Here, as the side emission type optical fiber 3, in the optical fiber whose interface between the core 2a and the clad 2b and part of its surface are roughened, the roughening process takes much labor time and further a difference in efficiency of extracting light is caused depending on positions in a circumferential direction of the fiber, and therefore when using optical fiber as a light guide, it is desirable rather than using optical fiber fabricated by this roughening method to use a side emission type optical fiber in which the light diffusing layer is provided between the core 2a and the clad 2b and the diffusing layer where the light diffusing material is dispersed in the clad 2b is formed.

### [Side Emission Type Glass Optical Fiber Provided with a Gas-Filled Layer between Core and Clad]

Further, as the side emission type optical fiber 3, side emission type glass optical fiber can be used. In this instance, in order to positively emit light from the surface of the optical fiber, it is considered that a nanostructure for scattering light from the core 2a to the clad 2b inside the optical fiber is introduced to an inside of the optical fiber and a geometric uneven structure is provided in the interface between the core 2a and the clad 2b.

In the case of the side emission type glass optical fiber, it is difficult to process a glass surface and apply a method forming an uneven shape on the surface of the core 2a to roughen the surface of the core 2a and further it is also difficult to disperse oxidized materials and organic materials uniformly inside the glass. Hence, in the case of the side emission type glass optical fiber, in order to obtain the nanostructure for obtaining a side emission property, such a method is adopted that a light diffusing gas filled region is provided inside the core 2a and in the interface between the core 2a and the clad 2b, which are different from the case of the side emission type plastic optical fiber, and thereby a method for scattering light is adopted.

Here, in the gas-filled region of the side emission type glass optical fiber, SO₂, Kr, Ar, CO₂, N₂, O₂, or mixtures of these substances can be used, and particularly, it is desirable to use SO₂. The region filled with these gases can be provided by delineating materials impregnated with the gases. As a size of a cross sectional surface of the gas filled region, the region can be set in a range of, e.g., 1 µm to 10 µm Further, a length of the gas filled region can be formed in 1 mm to 50 m by this delineating operation.

In addition, in the case of the side emission type glass optical fiber, in order to increase an amount of light extracted into the inside of the side emission type glass optical fiber, it is desirable that a core diameter is made larger than that of the silica glass fiber used for telecommunication.

As the side emission type glass optical fiber, the well-known side emission type glass optical fiber can be used and, e.g, "Fibrance Light-Diffusing Fiber" (trade name) that is light diffusing optical fiber made by Corning Incorporated, etc. can be also used. In addition, any optical fiber can be used as long as the optical fiber is the side emission type optical fiber besides the above mentioned commercially available optical fiber.

### [End Face Treatment of Side Emission Type Plastic Optical Fiber]

Further, when using the side emission type plastic optical fiber as the side emission type optical fiber 3, it is desirable to apply preliminarily an end face treatment to an end face of the side emission type plastic optical fiber. Further, in order to allow light to enter efficiently the side emission type plastic optical fiber, a layer different in refractive index from that of a base material is provided on an end face on a side of a light source of the side emission type plastic optical fiber, and thereby the well known anti-reflective layer may be formed by which reflected light is reduced by allowing a phase of the reflected light on a surface of the layer thus provided and a phase of the reflected light in an interface between the base material and the anti-reflective layer to become opposite to each other, and then canceling out the reflected lights. Further, the light source and the side emission type plastic optical fiber may be optically connected to each other with both optical axes slightly displaced from each other.

As the end face treatment in an end face opposite to the light source of the side emission type plastic optical fiber, the end face treatment needs to be applied in order to constrain the light leaking from the end face and improve a reflective property of the light in the end face. For example, there is a hot plate method. The hot plate method is one where an end face of a hot plate is pressed against a heated flat metal plate to transcribe a mirror surface of the flat metal plate to the hot plate. This method takes advantage of a property of a plastic material softened at such a comparatively low temperature as one hundred and several ten degrees C and hence can be carried out by a processing using a simple tool. Here, a surface of the metal plate is normally plated to obtain high smoothness. A ceramic heater is used as a heat source to heat the metal plate normally to on the order of 150 degrees C. Then, the end face of the side emission type plastic optical fiber is pressed against the metal plate thus heated and thereby a smooth end face can be obtained for 5 sec. or so.

Further, as the end face treatment method besides this hot plate method, there is an abrading method. The abrading method is one where an abrasive paper and an abrasive powder are used to abrade the end face of the side emission type plastic optical fiber and thereby obtain a smooth surface. As the abrasive paper, papers on the order of #1,000 to #3,000 can be used. Further, when needing a smoother surface, a finish abrading process must be performed using the abrasive powder.

Further, as an end face treatment method other than these methods, a metal reflective coating can be formed by a vacuum deposition and plating in a cross-sectional surface of a smooth fiber obtained by the above hot plate method and abrading method, thereby enabling the reflectance of the end face of the side emission type plastic optical fiber to be enhanced.

As methods other than the hot plate method and the abrading method, there are a free cut method and a hot cut method. Any methods, however, use a cut surface as it is, and hence is much less preferable as the finish process for improving the reflectance. When finishing the end face without increasing cost and requiring a lot of labor to finish the end face, these end face treatment methods can be used.

In addition, when using the side emission type plastic optical fiber as a light guide with the light sources provided in both the end faces of the side emission type plastic optical fiber, the end of the side emission type plastic optical fiber acts as an emitting end of light guided by the side emission type plastic optical fiber, and therefore a reflectance of the end faces for the light guided by the side emission type plastic optical fiber needs to be enhanced. Further, the ends of the side emission type plastic optical fiber act as incident ends when viewing the ends of the side emission type plastic optical fiber from the sides of the light sources, and therefore it is desirable that an antireflection coating is formed in the ends of the side emission type plastic optical fiber whose ends have undergone the end face treatment. In this manner, both the treatments for enhancing a reflecting property and preventing a reflection of light entering from the outside are applied to the ends of the side emission type plastic optical fiber, and thereby the illumination intensity of the light guide can be improved.

### [Flexible Resin Sheet]

Next, the flexible resin sheet 5 is described. The flexible resin sheet 5 is preliminarily formed into a form in conformity to an outer surface form of the side emission type optical fiber. The flexible resin sheet 5 is formed from, e.g., a microcellular structure resin sheet (a porous member containing a large number of fine foams).

### [Microcellular structure Resin Sheet]

In the microcellular structure rein sheet, it is preferable that an average foam diameter is in the range of 0.2 µm to 40 µm Here, when the average foam diameter is less than 0.2 µm, a light permeation rate becomes high to decrease the light reflectance. When the average foam diameter is too large, the diffuse reflectance decreases, and therefore the average foam diameter needs to be 0.2 µm or more and 40 µm or less. Further, it is preferable that the average foam diameter is 0.5 µm to 20 µm

The microcellular structure rein sheet is made of thermoplastic resin. As the optical property for visible light with wavelengths of 450 to 650 nm, the total reflectivity to the aluminum oxide standard plate is 90 % or more, the diffuse reflectance to the aluminum oxide standard plate is 90 % or more, and a wavelength dependence of the reflectance is 1 % or less. It is preferable that the total reflectivity is 95 % or more and the diffuse reflectance is also 95 % or more. In this fashion, since both the total reflectivity and the diffuse reflectance are high, the illumination intensity of the light guide can be improved and the light can be efficiently extracted from the opened section.

In addition, it is preferable that the microcellular structure rein sheet is made up of any one of thermoplastic microcellular structure resins made of PET resin, PC resin, flame retardant PC resin, or acryl resin.

In this manner, the microcellular structure resin sheet is used as the flexible resin sheet 5, and thereby when the side emission type optical fiber 3 is fitted into the flexible resin sheet 5, the side emission type optical fiber 3 can be stably held by repulsive force (form holding force) of the flexible resin sheet 5 with appropriate holding force held. Further, even when using the side emission type plastic optical fiber as the side emission type optical fiber 3, a surface scratch of the side emission type optical fiber 3 can be prevented between the flexible resin sheet 5 and the side emission type optical fiber 3.

In addition, the side emission type optical fiber 3 can be held and thereby the flexible resin sheet 5 and the side emission type optical fiber 3 are not necessarily allowed to adhere to each other. When allowing the both to adhere to each other, however, at least part of the contact portions between the flexible resin sheet 5 and the side emission type optical fiber 3 may be allowed to adhere to each other with a transparent adhesive agent with transparency. As the transparent adhesive agent, for example, an acrylic agent, a urethane agent, an epoxy agent, a silicone agent, etc. are applicable. Otherwise, a portion between the flexible resin sheet 5 and the side emission type optical fiber 3 may be filled with transparent light transmissive oil such as silicon oil instead of the adhesive agent. As the light transmissive oil, thermally-stable and low-temporal change oil is desirable.

### [Resin Sheet Subjected to Stretching Processing]

In addition, the resin sheet applied to the present invention is not limited to the above-mentioned microcellular structure resin sheet. For example, a polyester sheet containing inorganic particles or a film like resin sheet formed with fine foams inside itself by stretching a polyester sheet containing resin incompatible with polyester may be applicable. In this fashion, fine cavities can be formed by stretching the resin sheet dispersed with inorganic matter. In that case, since a resin film does not have sufficient rigidity, it is desirable that the above-mentioned adhesion is carried out. Here, as the polyester sheet containing the inorganic particles, e.g., E60L made by Toray Industries, Inc. can be used. As this polyester sheet, it is desirable to use the sheet whose total reflectivity and diffuse reflectance when a reflectance of an aluminum oxide standard plate is defined as 100 % are both 90 % or more and are preferably 95 % or more.

Here, as shown in Fig. 3, a portion covered with the flexible resin sheet 5 in part of an outer circumferential surface of the side emission type optical fiber 3 is defined as a covered section 7. Further, a portion not covered with the flexible resin sheet 5 to expose part of the outer circumferential surface of the side emission type optical fiber 3 is defined as an opened section 9. In this case, it is desirable that the covered section 7 is formed in a half or more of the circumferential length of the side emission type optical fiber 3. In other words, it is desirable that the opened section 9 is formed in a half or less of the circumferential length of the side emission type optical fiber 3.

The covered section 7 is formed in the half or more of the circumferential length of the side emission type optical fiber 3 and thereby the flexible resin sheet 5 is easily fitted into the side emission type optical fiber 3 by utilizing the holding force of the flexible resin sheet 5. Further, by narrowing the opened section 9, a portion from which light leaks from the outer circumferential surface of the side emission type optical fiber 3 is constrained, enabling the light to be stretched away.

The linear light guide 1 is formed with the covered section 7 formed parallel, continuously, and approximately linearly in a longitudinal direction of the side emission type optical fiber 3. In other words, the opened section 9 is formed parallel, continuously, and approximately linearly in the longitudinal direction of the side emission type optical fiber 3. Accordingly, the linear light guide 1 can emit light linearly.

As described above, according to the present invention, the side emission type optical fiber 3 is partially covered with the flexible resin sheet 5 and thereby the attenuation of light transmitting through the linear light guide decreases, so that the illumination intensity of the linear illumination can be improved. Besides, the light can be emitted to a longer distance.

Further, by using the microcellular structure resin sheet for the flexible resin sheet 5, the side emission type optical fiber 3 can be held by appropriate holding force since the flexible resin sheet 5 includes some degree of a form maintaining property. Especially, the flexible resin sheet 5 covers the half or more of the circumferential length of the side emission type optical fiber 3 and thereby the side emission type optical fiber 3 can be easily fitted into the flexible resin sheet 5.

### [Second Embodiment]

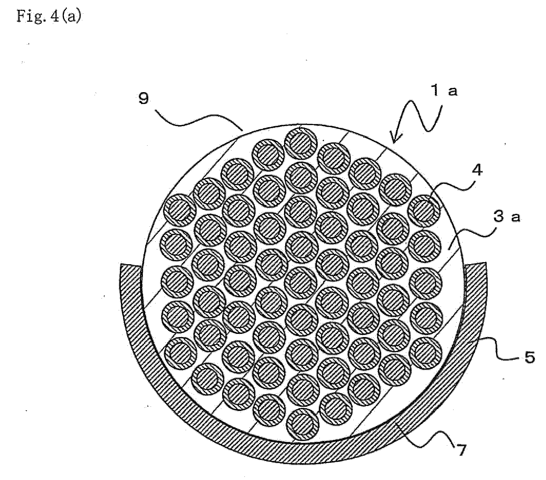

Next is a description on a second embodiment. Fig. 4(a) is a cross-sectional conceptual view of a linear light guide 1a according to the second embodiment. In addition, in the following description, symbols the same as those in Fig. 1 to Fig. 3 are attached to structures exerting functions the same as those of the linear light guide 1, and thereby overlapping descriptions are omitted.

### [Side Emission Type Multi-core Optical Fiber]

A linear light guide 1a has a structure approximately the same as that of the linear light guide 1. The structure of the linear light guide 1a is, however, different in that side emission type multi-core optical fiber is used as the side emission type optical fiber. As the side emission type multi-core optical fiber, though the side emission type multi-core silica glass optical fiber can be used, the side emission type multi-core plastic optical fiber is preferable.

As the multi-core plastic optical fiber, side emission type multi-core plastic optical fiber shown in Fig. 4(a) can be used. In the multi-core plastic optical fiber, as shown in Fig. 4(a), side emission type optical fiber strands 4 made up of a core layer made of PMMA-based resin and a first clad layer called a sheath layer formed in an outer circumference of the core layer are dispersedly formed in a sea portion composed of a second clad layer. Then, in the clad layer, tetrafluoroethylene acting as a main component, and copolymers such as hexafluoropropylene, vinylidene fluoride, etc. can be used for both the first clad layer and the second clad layer formed with the sea portion.

Here, a material of the same composition can be used for both the first clad layer and the second clad layer. By making up thus the clad layers, light can be extracted from surfaces of the side emission type optical fiber strands 4 composed of the core layer and the first clad layer. Further, the light extracted from the surfaces of the side emission type optical fiber strands 4 can be extracted from a lateral side of the second clad layer. Here, the core layer can be directly provided inside a sea structure of the second clad layer without providing the first clad layer.

By doing in this manner, the light can be extracted efficiently from each of the side emission type optical fiber strands 4 to an outer circumferential portion of the multi-core optical fiber. Further, each multi-core plastic optical fiber of the side emission type optical fiber with a refractive-index distribution of an SI type in a sheath structure where the first clad layer is formed in the core layer can be bent to be able to be used at a small radius of curvature with respect to its fiber diameter because of its structure, and hence an increase in local light leakage is small at the bent portion. Hence, an illuminating device excellent in uniformity of light leakage can be obtained.

Here, in order to improve an efficiency of extracting the light from the lateral side of the multi-core plastic optical fiber, a technologies for forming the unevenness in the interface between the core layer and the clad layer and imparting a light diffusing property caused by adding particulates can be used together. Generally, however, as the side emission type optical fiber strands 4, the side emission type optical fiber strands 4 to whose clad layer light diffusing particulates are added is used. When using the side emission type multi-core silica glass optical fiber, it is desirable that the side emission type glass optical fiber provided with the gas-filled layer between the core 2a and the clad 2b is used as the side emission type optical fiber strands 4.

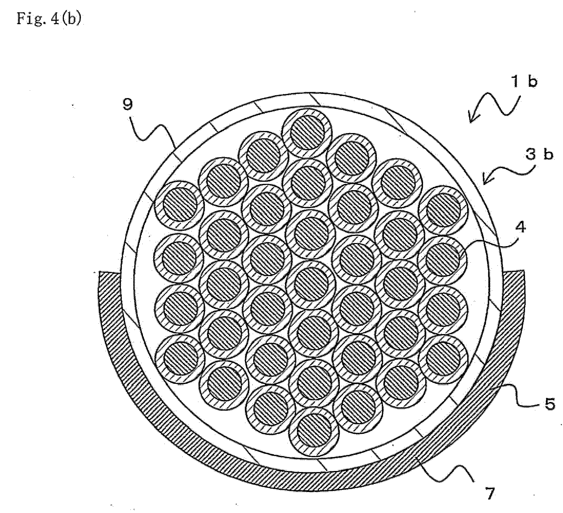

In addition, the multi-core plastic optical fiber is not limited to the above multi-core plastic optical fiber. For example, as is the case with the linear light guide 1b shown in Fig. 4(b), the multi-core plastic optical fiber may be a bundled type multi-core plastic optical fiber formed by bundling the side emission type optical fiber strands 4 composed of a plurality of single cores.

A multi-core optical fiber is the multi-core bundled plastic optical fiber formed by bundling the side emission type optical fiber strands 4 composed of a plurality of single core. The bundled type multi-core plastic optical fiber is, e.g., is made up of units in which a plurality of the side emission type plastic optical fiber strands is entwisted to be gathered together. There is provided a press-wrapping layer (its figure is omitted) in which a transparent resin tape is used in an outer circumference of the unit and further transparent flexible plastic is sheathed in an outer circumference of the press-wrapping layer to form a sheathe tube and thereby the bundled type multi-core plastic optical fiber can be obtained. Here, also when using the side emission type multi-core silica glass optical fiber, it goes without saying that the multi-core type optical fiber shown in Fig. 4(a) and the bundled type optical fiber shown in Fig. 4(b) can be used.

Vinyl chloride resin, acryl resin, polycarbonate resin, polyester resin, polyvinyl acetate resin, and ethylene-vinyl acetate copolymer resin can be used for the resin for this sheathe tube. In this case, it is preferable that a loose-type coating is used as a coating of the press-wrapping layer and by coating loosely the press-wrapping layer, the bundled type optical fiber cable excellent in workability can be made.

For example, in this manner, in the side emission type multi-core plastic optical fiber, a total value of gap areas between each component fiber and clad portion area becomes large as compared to a large-diameter plastic optical fiber, and hence an effective cross-sectional area gets smaller than that of the large-diameter plastic optical fiber and then its light receiving efficiency decreases. However, such advantages are obtained that the linear light guide 1b can be enlarged in diameter and further plasticity and flexibility of the optical fiber are also improved. Further, also the end face treatment of the side emission type multi-core plastic optical fiber can be readily carried out by a hot knife, etc. and the workability and handling capability of the side emission type multi-core plastic optical fiber are excellent, so that the side emission type multi-core plastic optical fiber is suitable for applications for requiring three-dimensional flexibility.

According to the second embodiment, the same effect as that made by the first embodiment can be obtained. Further, by using the side emission type optical fibers 3a, 3b, the linear light guides 1a, 1b can be easily enlarged in outer diameter.

### [Third Embodiment]

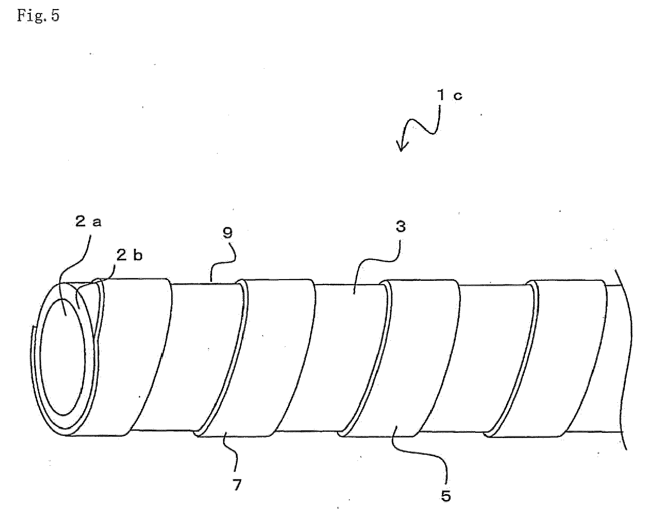

Next is a description on a third embodiment. Fig. 5 is a perspective view of a linear light guide 1c according to the third embodiment. The linear light guide 1c has a structure approximately the same as that of the linear light guide 1. The linear light guide 1c is, however, different from the linear light guide 1 in that the flexible resin sheet 5 is spirally wound around the outer circumference of the side emission type optical fiber 3.

The flexible resin sheet 5 is spirally wound around the outer circumferential surface of the side emission type optical fiber 3 so as to form gaps at predetermined intervals on the outer circumferential surface of the side emission type optical fiber 3. Accordingly, the covered section 7 and the opened section 9 are spirally formed on the outer circumferential surface of the side emission type optical fiber 3. In addition, the covered section 7 and the opened section 9 are spirally and continuously formed in the longitudinal direction of the side emission type optical fiber 3.

Since the opened section 9 for enabling light to be visible is spirally formed in the linear light guide 1c, a light emission portion and a non-light emission portion are alternately formed in a longitudinal direction of the linear light guide 1c.

According to the third embodiment, the same effect as that made by the first embodiment can be obtained. Further, the light emission portion becomes not linear but spiral, and hence a linear light guide with a high design quality can be obtained.

### [Fourth Embodiment]

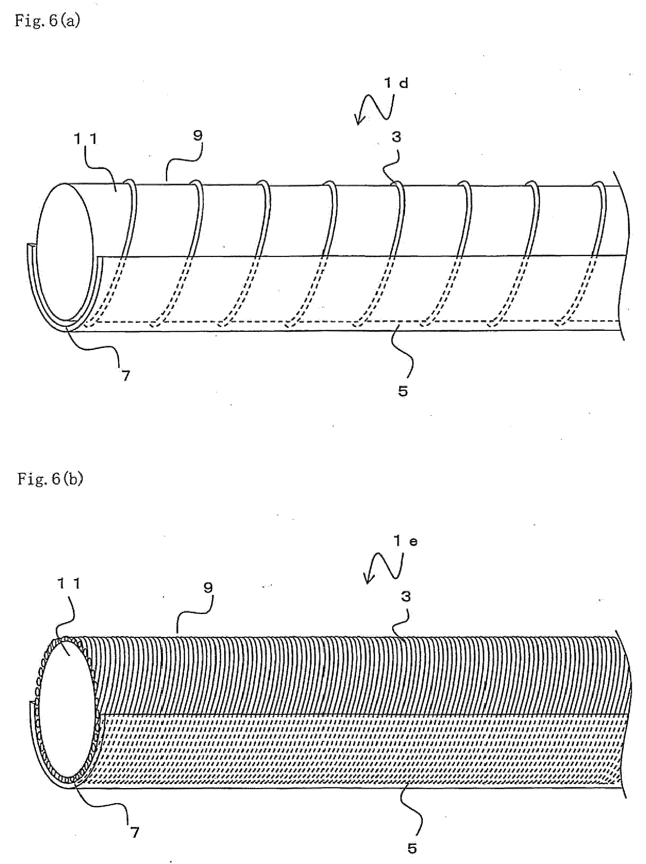

Next is a description on a fourth embodiment. Fig. 6(a) is a perspective view of a linear light guide 1d according to the fourth embodiment. The linear light guide 1d has a structure approximately the same as that of the linear light guide 1. The linear light guide 1d is, however, different from the linear light guide 1 in that the flexible resin sheet 5 is not provided in the outer circumference surface of the side emission type optical fiber 3 but the side emission type optical fiber 3 is wound around a rod body 11.

The rod body 11 is transparent and is made of, e.g., flexible resin. The side emission type optical fiber 3 is spirally wound around an outer surface of the rod body 11 so that the side emission type optical fiber 3 is allowed to be in close contact with the rod body 11. The flexible resin sheet 5 is provided on a structure formed by winding the side emission type optical fiber 3 around the outer circumference of the rod body 11 so that the flexible resin sheet 5 covers part of a circumferential length of the structure. In addition, a portion of the structure covered with the flexible resin sheet 5 acts as the covered section 7 and a portion of the structure not covered with the flexible resin sheet 5 to be exposed acts as the opened section 9.

In the opened section 9, the side emission type optical fiber 3 is spirally exposed. Therefore, the light emission from the exposed portions of the side emission type optical fiber 3 is visible. Further, in the covered section 7, light from the side emission type optical fiber 3 is reflected by the flexible resin sheet 5 to be radiated from the opened section 9 via the transparent rod body 11. Hence, the light emitted on a side of the covered section 7 is visible from the opened section 9.

In addition, the side emission type optical fiber 3 may be the side emission type plastic optical fiber and further may be the side emission type glass optical fiber, too. For example, silica glass optical fiber that is the side emission type glass optical fiber is thin in diameter as compared to that of the plastic optical fiber. For this reason, as the side emission type optical fiber 3 that is wound around the rod body 11, also the plastic optical fiber can be used. However, by using silica glass optical fiber that is thin in diameter instead of using the plastic optical fiber, the winding work around the rod body 11 made of resin becomes easy.

In this manner, by using the side emission type glass optical fiber as the side emission type optical fiber 3, the side emission type glass optical fiber is applicable to a small radius of curvature and hence it becomes easy to wind the optical fiber around the rod body and draw a pictorial figure.

In addition, even when a bending radius in bending the optical fiber at 90 degrees is set at as small as 5 mm, a light leakage quantity can be made less than 1dB/km and then the optical loss cannot be extremely large. By winding the side emission type optical fiber 3 around the outer circumference of the rod body 11 in this manner, a large-diameter linear light guide 1d can be obtained.

In addition, the configuration of the flexible resin sheet 5 is not limited to the example shown in Fig. 6(a) and as shown in Fig. 5, a spiral winding may be applicable.

Further, without winding a piece of side emission type optical fiber 3 around the rod body 11, a plurality of the side emission type optical fibers 3 may be wound around the rod body 11 in parallel. By doing in this way, intervals (pitches) between the side emission type optical fibers 3 can be decreased. Further, the side emission type optical fibers 3 is not spirally wound at intervals but the side emission type optical fibers 3 can be also wound so that the side emission type optical fibers 3 are allowed to be in close contact with each other in the same way as the linear light guide 1e shown in Fig. 6(b).

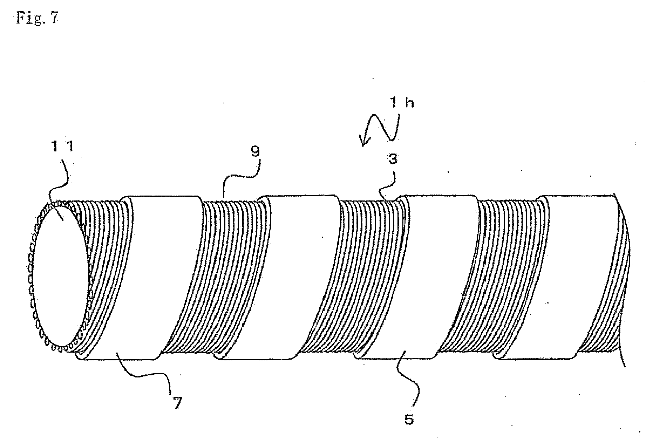

In this case, as is the case with the linear light guide 1h shown in Fig. 7, the flexible resin sheet 5 may be spirally wound around the outer circumferential surface of a structure, which is formed by winding the side emission type optical fibers 3 so that the side emission type optical fibers 3 are allowed to be in close contact with each other, so as to form gaps at predetermined intervals on the outer circumferential surface of the structure. Accordingly, the covered section 7 and the opened section 9 are spirally formed on the outer circumferential surfaces of the side emission type optical fibers 3. In addition, the covered section 7 and the opened section 9 are spirally and continuously formed in the longitudinal direction of the side emission type optical fibers 3.

According to the fourth embodiment, the same effect as that made by the first embodiment can be obtained. Further, the side emission type optical fiber 3 is wound around the rod body 11 so that the side emission type optical fiber 3 is allowed to be in close contact with each other, and thereby a large-diameter linear light guide can be obtained.

### [Fifth Embodiment]

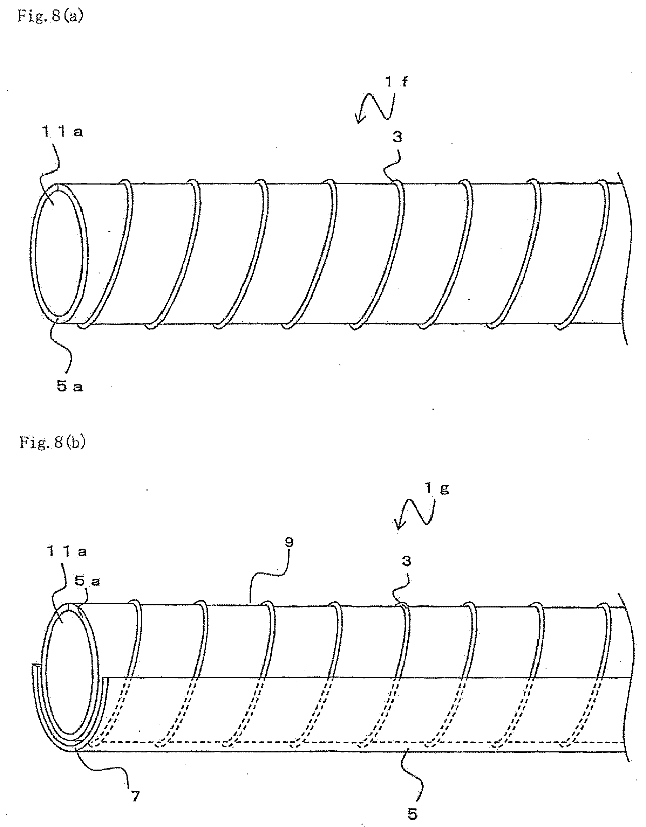

Next is a description on a fifth embodiment. Fig. 8(a) is a perspective view of a linear light guide If according to the fifth embodiment. The linear light guide If has a structure approximately the same as that of the linear light guide 1d. The linear light guide If is, however, different from the linear light guide 1d in that the flexible resin sheet 5a is wound around a rod body 11a.

The rod body 11a is a member made of, e.g., flexible resin. The flexible resin sheet 5a is wound around an outer circumference of the rod body 11a by a longitudinally lapped winding. Specifically, the whole of the outer circumferential surface of the rod body 11a is covered with the flexible resin sheet 5a. In addition, as the flexible resin sheet 5a, a sheet the same as the above mentioned flexible resin sheet 5 can be used.

The side emission type optical fibers 3 is spirally wound around a structure formed by winding the flexible resin sheet 5a around the outer circumference of the rod body 11a so that the side emission type optical fibers 3 is allowed to be in close contact with the flexible resin sheet 5a. In other words, the side emission type optical fiber 3 is spirally exposed on the outer circumferential surface of the flexible resin sheet 5a.

Since the side emission type optical fiber 3 is spirally exposed, the spiral luminescence emitted from the side emission type optical fiber 3, that is exposed, is visible. Further, light radiated to a side of the flexible resin sheet 5a is reflected by the flexible resin sheet 5a to be emitted in the outer circumferential surface direction.

In addition, in the present embodiment, as is the case with the linear light guide 1g shown in Fig. 8(b), the flexible resin sheet 5 may be further provided in an outer circumference of the linear light guide 1f. In other words, the flexible resin sheet 5 is provided so that the flexible resin sheet 5 covers part of a circumferential length of the linear light guide 1f. In this case, a portion covered with the flexible resin sheet 5 becomes the covered section 7 for the linear light guide 1f, while a portion not covered with the flexible resin sheet 5 to be exposed becomes the opened section 9 for the linear light guide If.

According to the fifth embodiment, the same effect as that made by the fourth embodiment can be obtained. Further, the side emission type optical fiber 3 is wound around the rod body 11 so that the side emission type optical fiber 3 is allowed to be in close contact with the rod body 11 a and thereby a large-diameter linear light guide can be obtained.

### [Linear Light Guide Structure]

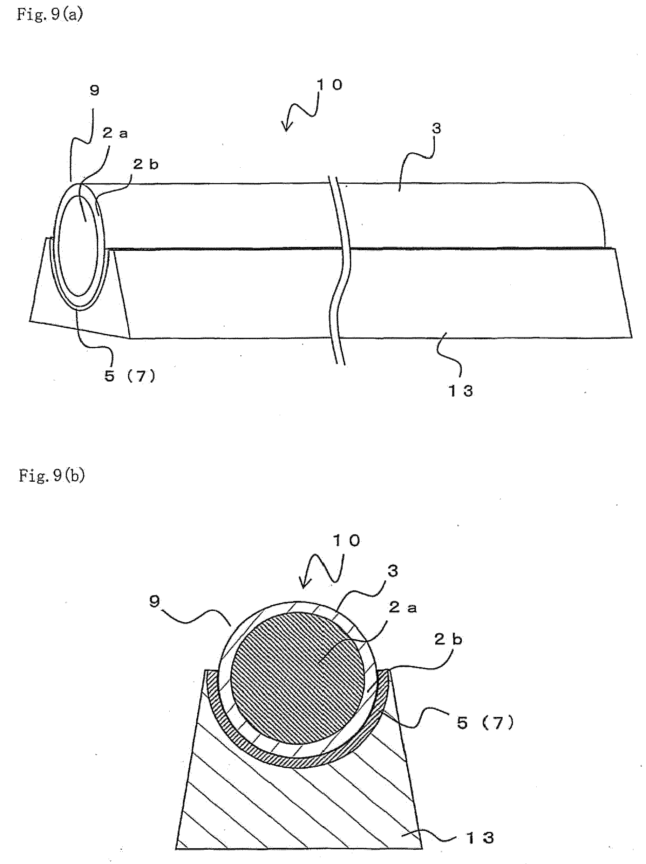

Next is a description on a linear light guide structure. Fig. 9(a) is a perspective view of the linear light guide structure 10 and Fig. 9(b) is a cross-sectional view vertical to a longitudinal direction of the linear light guide structure 10.

The linear light guide structure 10 is one where the above-mentioned each type of the linear light guides is house in a case 13. In addition, the example shown in the figures shows one where the linear light guide 1 is housed in the case 13. However, any one of the linear light guides 1a to 1g, 1h may be housed in the case 13. Further, a form of the case 13 is not limited to that of the example shown in Fig. 9(a) and Fig. 9(b).

The case 13 is made of flexible soft resin. The case 13 is formed with a groove in conformity to the external form of the linear light guide (the side emission type optical fibers 3). The linear light guide 1 is housed in the groove of the case 13.

Here, the flexible resin sheet 5 is necessarily arranged between the case 13 and the linear light guide 1 (the side emission type optical fibers 3). In other words, an entire portion of an inner surface of the groove in the case 13 is covered with the flexible resin sheet 5. Hence, light from the side emission type optical fibers 3 is not radiated to the inner surface of the case 13.

In addition, the case 13 and the linear light guide (the flexible resin sheet 5) are allowed to adhere to each other by, e. g., an adhesive agent.

Since the linear light guide is held by the case 13 according to the present embodiment, it becomes easy to place the linear light guide at a desired position. Further, when housing the linear light guide in the case 13, the flexible resin sheet 5 acts as a cushioning member in fitting (press fitting) the linear light guide into the case 13. Hence, the linear light guide can be stably held while preserving an appropriate holding force, and then a surface of the linear light guide can be prevented from being scratched.

### [Planar Light Guide Structure]

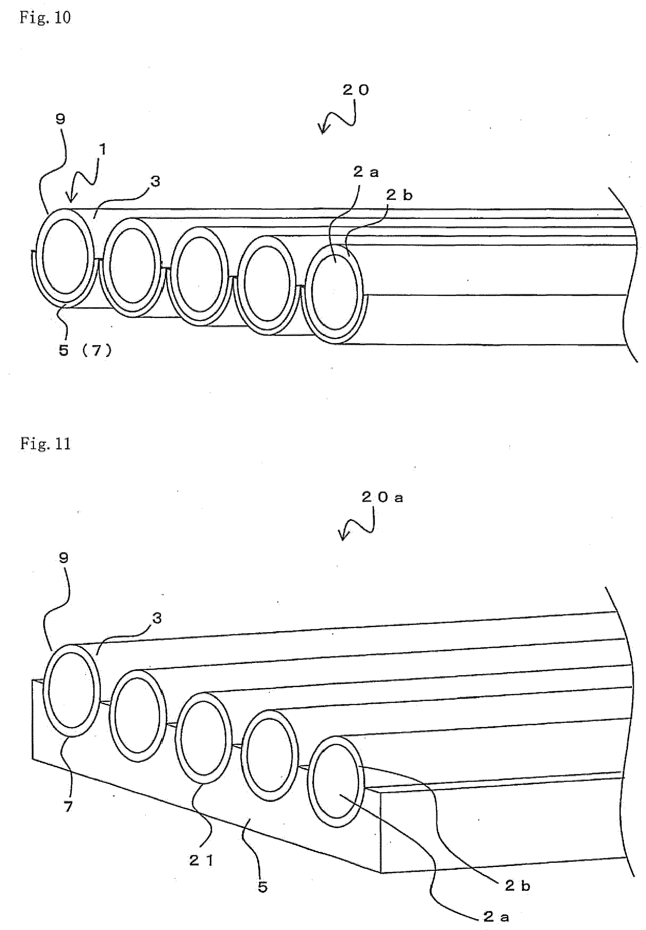

Next is a description on a planar light guide structure. Fig. 10 is a perspective view showing a planar light guide structure 20. In the above description, the linear light guide, etc. have been described. In other words, when allowing the linear light guide, etc. to become light emitted, light is allowed to emit linearly. On the other hand, the planar light guide structure 20 has a planar light emission section and can emit light over a wider range.

The planar light guide structure 20 is made up of a plurality of the linear light guides 1. In addition, in the following description, an example using the linear light guide 1 is described. However, all of the linear light guides 1a to 1g, and 1h are applicable. Further, in the example shown in the figures, an example in which five linear light guides 1 are provided side by side is shown. However, the number of the linear light guides provided side by side is not limited to five.

A plurality of the linear light guides 1 is provided side by side and is allowed to adhere to each other. On this occasion, the linear light guides 1 are arranged so that each opened section 9 is allowed to face uniformly in the same direction. Hence, a planar body is formed by the opened sections 9 of a plurality of the linear light guides 1. In other words, each of the opened sections 9 in a plurality of the linear light guides 1 is arranged in such a manner as to face uniformly in a normal direction of the planar body.

When allowing the planar light guide structure 20 to become light emitted, since the light emission section is planar, a wider area is able to become light emitted in comparison with the case where the linear light guide 1 is singly used. In addition, each linear light guide 1 is housed in the case 13 and the cases 13 may be allowed to adhere to each other. Further, the whole of the planar light guide structure 20 may be housed in one case.

Furthermore, as shown in Fig. 10, the flexible resin sheet 5 may be separately formed for each of the side emission type optical fibers 3. The flexible resin sheets 5 may be, however, formed in an integrated manner.

Fig. 11 is a perspective view showing the planar light guide structure 20a. In the planar light guide structure 20a, a plurality of the linear light guides 1 is not provided side by side to be allowed to adhere to each other, but the flexible resin sheet 5 itself is formed with depressed portions 21 in conformity to the side emission type optical fibers 3. The side emission type optical fibers 3 are each arranged in each of the depressed portions 21 of the flexible resin sheet 5.

The side emission type optical fibers 3 are arranged in the depressed portions 21 of the flexible resin sheet 5, and then a plurality of the side emission type optical fibers is provided side by side, and thereby the planar light guide structure 20a is formed. In addition, the side emission type optical fibers 3 and the flexible resin sheet 5 are, e.g., allowed to adhere to each other with the transparent adhesive agent. Further, when an opening width of the depressed portion 21 is smaller than an outer diameter of the side emission type optical fiber 3, the side emission type optical fiber 3 is press fitted into the depressed portion 21 and thereby the side emission type optical fiber 3 can be held in the depressed portion 21.

According to the present embodiment, the light emission section is planar, and therefore a wider range can become light emitted.

### [Illuminating Device]

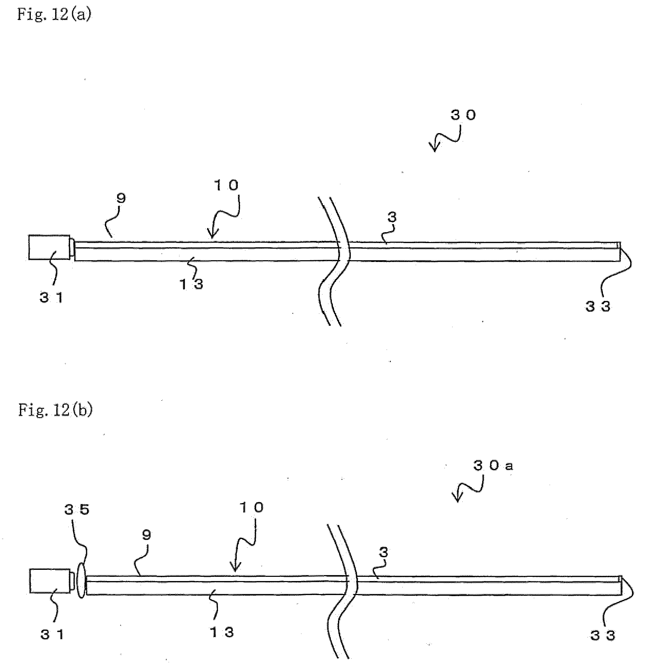

Next is a description on an illuminating device. Fig. 12(a) is a conceptual view showing an illuminating device 30. The illuminating device 30 is made up of the linear light guide structure 10, a light source 31, etc. In addition, in the following description, an example of using the linear light guide structure 10 is described. The linear light guide 1, etc. are, however, applicable. Further, the planar light guide structure 20, etc. may be applicable as substitute for the linear light guide 1, etc. Further, in substitution for the light guide structure, the linear light guide may be directly used without housing the linear light guide in the flexible soft resin or rubber case with the linear light guide covered.

The light source 31 is provided in one end face in the longitudinal direction of the side emission type optical fiber 3. The light source 31 is operated to allow predetermined wavelength light to enter the end face of the side emission type optical fiber 3 in conformity to an optical axis of the side emission type optical fiber 3. In addition, the light source 31 contacts with the end face of the side emission type optical fiber 3 to be optically connected directly with the side emission type optical fiber 3.

In addition, PMMA-based plastic optical fiber, e.g., causes a low loss in wavelengths of 570 nm to 650 nm, and therefore it is desirable to use an LED element for the light source 31.

Further, as the light source 31, in addition to an LED element, such semiconductor lasers can be used as, e.g., red semiconductor laser using, as its material, ALGaInP-based quaternary mixed crystals that become luminous at a visible region of 650 nm and AlGaInN-based blue laser using the AlGaInN-based mixed crystals.

As an LED element, it is desirable that a bullet-shaped LED element high in beam spread directivity of LED luminescence is used. For example, though an orientation angle that means an angle distribution of a luminescence intensity of a flat LED element is 120 degrees, a resin mold is lens-shaped in the bullet-shaped LED element and its orientation of luminous intensity distribution angle can be designed as, e.g., 20 degrees to 30 degrees, and hence it is desirable that the bullet-shaped LED element is used.

Here, it is desirable that after optically connecting the light source 31 and the linear light guide structure 10 with each other, the both is fixed to each other with a positional relationship of the both kept for the purpose of preventing an optical connection efficiency from decreasing. Further, the light source 31 may be housed in the case 13.

Furthermore, as is the case with the illuminating device 30a shown in Fig. 12(b), a lens 35 is arranged between the light source 31 and the side emission type optical fiber 3, and then the side emission type optical fiber 3 and the light source 31 may be optically connected via the lens 35. In this fashion, when light emitted from the light source 31 is allowed to enter the side emission type optical fiber 3 using the lens 35, the LED element need not be the bullet-shaped one and a typical LED element can be used.

In addition, it is desirable that a large-core-diameter multimode fiber is used with the lens 35 used to connect optically the light source 31 and the linear light guide structure 10 with each other. The reason is that an influence caused by axial misalignment between the light source and the optical fiber in the case of using the large-core-diameter multimode fiber is smaller than that caused in the case of using single mode fiber.

It is desirable that low reflecting-loss and large-diameter fiber is used for the linear light guide in point of a transmission loss. As the large-diameter fiber, e.g., 3 mmϕ to 12 mmϕ -fibers are used. However, the smaller the radius of curvature (the larger the bending degree) and the larger the diameter of the core 2a, a bending loss becomes large. For this reason, in order to make the plastic optical fiber large in diameter in consideration of both bendability and the transmission loss, the multi-core plastic optical fiber can be used as is the case with the above-mentioned linear light guides 1a, 1b.

A reflective coating 33 is formed in or the end face treatment is applied to the other end face (a side where the light source 31 is not provided) in the longitudinal direction of the side emission type optical fiber 3. The reflective coating 33 is, e.g., a metal coating. By providing the reflective coating 33, light can be prevented from leaking from the end face.

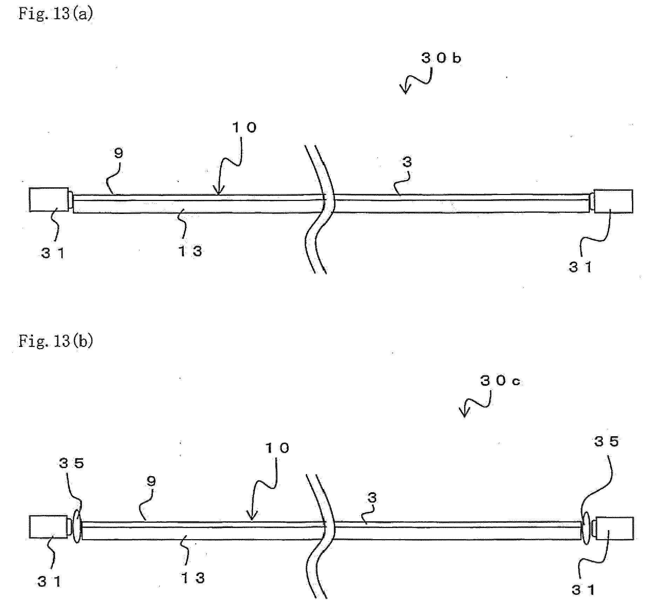

Further, as is the case with the illuminating device 30b shown in Fig. 13(a), the light sources 31 may be arranged in both the ends of the side emission type optical fiber 3. In this instance, the reflective coating 33 is not formed. In the illuminating device 30b, each of the light sources 31 contacts with each of the end faces of the side emission type optical fiber 3 to be optically connected directly with each of the side emission type optical fiber 3.

Furthermore, as is the case with the illuminating device 30c shown in Fig. 13(b), the light source 31 and the lens 35 may be arranged in both the ends of the side emission type optical fiber 3. Also in this instance, the reflective coating 33 is not formed. In the illuminating device 30c, the lenses 35 are arranged between the light sources 31 and both the end faces of the side emission type optical fiber 3 to connect optically the side emission type optical fiber 3 and the light sources 31 with each other via the lenses.

By allowing light to enter the end faces of the side emission type optical fiber 3 from the light sources 31, the light can be extracted from the opened section 9. In sum, the light emission can be performed in conformity to the form of the opened section 9.

In addition, with respect to colors of the LED element, white, yellow, red, blue, green, etc. can be arbitrarily selected depending on the intended use. In regard to the selection of a produced color, there are a case where a luminous wavelength of the LED element is directly changed and a case where various luminescent colors are obtained by utilizing phosphor particulates.

Here, as described above, the luminescent color may be changed by varying a luminous wavelength. The phosphor particulates may be, however, utilized to change the luminescent color.

As phosphor particulates with a wavelength conversion function, e.g., in the ascending order of wavelength, a green phosphor capable of converting blue light into green light, a yellow phosphor capable of converting blue light into yellow light, and a red phosphor capable of converting blue light into red light, etc. are cited. In this fashion, the phosphor particulates of any one of the blue phosphor ones, the green phosphor ones, the yellow phosphor ones, and the red phosphor ones may be dispersed in the core 2a or clad 2b of the side emission type optical fiber 3.

In addition as the green phosphor, there is Ca₃Sc₂Si₃O₁₂ and an emission wavelength of this phosphor ranges from 480 nm to 620 nm (the peak wavelength is 515 nm) for the light of a GAN-based blue LED that emits exciting lights ranging from 445 nm to 460 nm. Further, as the yellow phosphor, there is Y₃Al₅O₁₂ and the emission wavelength of this phosphor ranges from 520 nm to 680 nm (the peak wavelength ranges from 540 nm to 570 nm) for the light of the GAN-based blue LED that emits the exciting lights of 460 nm. Furthermore, as the red phosphor, there is CaAlSiN₃ and the emission wavelength of this phosphor ranges from 580 nm to 720 nm (the peak wavelength ranges from 630 nm to 660 nm) for the light of a GAN-based blue LED that emits the exciting lights ranging from 445 nm to 460 nm. Moreover, other than these phosphors, nitride phosphor such as CaAlSiN₃: Eu, and CaSiN₂: Eu are cited.

Further, besides those described above, there is a method for converting a color hue from red to orange using the LED element with a luminescent peak ranging from 360 nm to 480 nm and further using a light converting member such as a light converting paint with an optical transparency and a light converting sheet. Here, the light converting paint is, e.g., a red pigment to an orange pigment, acryl resins, additive agents, and organic solvents. Here, as a general component of coating film, various resins such as acryl resin, urethane resin, melamine resin, polycarbonate resin, etc. can be used.

As described above, according to the illuminating device of the present invention, since light is prevented from leaking from the side emission type optical fiber 3 by the flexible resin sheet 5 to inhibit the light from attenuating, high illumination intensity and long-distance luminescence become possible.

Further, by the selection of the LED element and the combination of the phosphor particulates, various luminescent colors can be obtained.

Furthermore, since the illuminating device is wholly flexible, the illuminating device can be transformed into an arbitrary three-dimensional form, and hence can form pictorial figures, characters, etc. In addition, the illuminating device according to the present invention is particularly suitable for, e.g., an illuminating device for ornamental use, an illuminating device for visible guide sign, an illuminating device for automobile interior, etc.

### [Embodiment]

In regard to the illuminating device using the linear light guide according to the present invention and an illuminating device using a linear light guide not including the flexible resin sheet, both the illumination intensities were evaluated.

### [Embodiment 1]

As the side emission type optical fiber, the side emission type plastic optical fiber made of PMMA was used. Specifically, RAY MILKY FLEX (trade name) (ϕ3.5 mm±0.2 mm) made by 3M Japan Limited was used. Also, a core was made of special acryl resin and a clad was made of fluorine-based resin.

Further, as the flexible resin sheet, 0.3 mm-thick MC-PET (trade name), made by Furukawa Electric Co., Ltd., was used whose total reflectivity and diffuse reflectance were 98 % and similarly 98 %, respectively as optical reflectances in a visible light region when the total reflectivity of the aluminum oxide standard plate was defined as 100 %. The above mentioned flexible resin sheet was, as shown in Fig. 2, wound longitudinally lapped around the outer circumference of the side emission type optical fiber so that part of the outer circumference of the side emission type optical fiber was opened and the opened sections were approximately linearly formed thereon.

The LED element was allowed to contact directly with one end of the linear light guide to be connected optically with the linear light guide without using the lens. As the LED element, an LED element whose type was LP-B56A5111A (which was a 5ϕ-bullet-shaped LED element emitting 470 nm-wavelength blue color and was 20 mW in driving current) was used. In addition, the reflective coating was not formed in the other end of the side emission type optical fiber.

### [Comparative Example]

A comparative example had a structure the same as that made in the embodiment 1 except that the flexible resin sheet was not used in contrast to the embodiment 1.

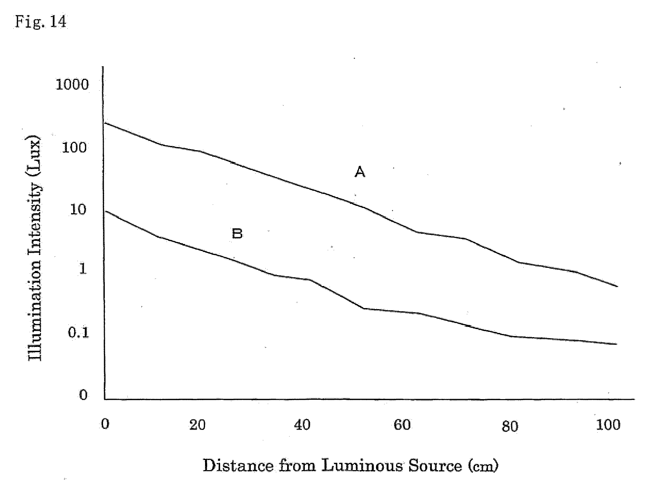

Fig. 14 is a graph in which a relationship between a distance from the light source and the illumination intensity are compared. In Fig. 14, a line A denotes a result in the embodiment 1 and a line B denotes a result in the comparative example.

In both cases, the illumination intensity decreases as getting away from the light source. The illumination intensity in the embodiment 1 (the line A) is, however, higher in any positions as compared to that in the comparative example (the line B). In other words, the embodiment 1 can ensure sufficient illumination intensity for a position distant from the light source. For example, in regard to a distance at which the illumination intensity of 1.0 lux or more could be ensured, in contrast to the result that this distance was about 30 cm in the comparative example, this distance in the embodiment was on the order of 90 cm that is three times longer than 30 cm. Further, in comparison between the illumination intensities at the same distance from the light source in both the embodiment 1 and the comparative example, e.g., at a distance of about 90 cm from the light source, in contrast to the result that the illumination intensity in the comparative example was 0.1 lux, the illumination intensity in the embodiment 1 was 1.0 lux. Thus, the embodiment 1 exhibited the illumination intensity that was ten times that in the comparative example.

### [Embodiment 2]

In substitution for the side emission type optical fiber in the embodiment 1, the multi-core plastic optical fiber was used. The optical fiber whose sea portion (resin surrounding each core) and clad were made of a fluoride polymer of fluoromethacrylate polymer, respectively was used. In addition, the occupancy of the core in a cross-sectional surface of the optical fiber was 80 %. In order to enhance a light extracting efficiency, optical fiber using a light diffusing material was used between core and clad.

Also in the embodiment 2, as is the case with the embodiment 1, after comparing the illumination intensities depending on the presence and absence of the flexible resin sheet, it was learnt that the illumination intensities in the embodiment 2 according to the present invention using the flexible resin sheet were higher than those in the comparative example in any positions, thus enabling a sufficient illumination intensity to be ensured to a distant position from the light source.

### [Embodiment 3]

The side emission type optical fiber in the embodiment 1 was wound around the rod body made of PMMA so that the side emission type optical fiber was allowed to be in close contact with the rod body. The flexible resin sheet was wound longitudinally lapped around the outer circumference of the structure, formed by winding the side emission type optical fiber around the rod body, so that the flexible resin sheet covers part of the outer circumference of the structure. Further, as an LED light source, a red LED with a 635 nm wavelength and a peak current of about 5 mW was used. In the embodiment 3, as the side emission type optical fiber, "Fibrance Light-Diffusing Fiber" (trade name) that was the light-diffusing optical fiber made by Corning Incorporated and was about 1 mm in outer diameter was used.

Also in the embodiment 3, as is the case with the embodiment 1, after comparing the illumination intensities depending on the presence and absence of the flexible resin sheet, it was learnt that the illumination intensities in the embodiment 3 according to the present invention using the flexible resin sheet were higher than those in the comparative example in any positions, thus enabling a sufficient illumination intensity to be ensured to a distant position from the light source.

### [Embodiment 4]

In substitution for the flexible resin sheet in the embodiment 1, a polyester film, made by Toray Industries, Inc., which was added with inorganic particles in polyester and was stretched was used. A polyester film was used whose total reflectivity and diffuse reflectance were 96 % and 95 %, respectively for a reflectance at aluminum oxide plate.

Also in the embodiment 4, as is the case with the embodiment 1, after comparing the illumination intensities depending on the presence and absence of the flexible resin sheet, it was learnt that the illumination intensities in the embodiment 4 according to the present invention using the flexible resin sheet were higher than those in the comparative example in any positions, thus enabling a sufficient illumination intensity to be ensured to a distant position from the light source.

### [Embodiment 5]

The phosphor particulates were dispersed in the side emission type optical fiber in the embodiment 1. In addition, in order to allow a 460 nm blue LED element to produce a green color, Ca₃Sc₂Si₃O₁₂ was used. In the same manner, in order to allow a 460 nm blue LED element to produce a yellow color, Y₃Al₅O₁₂ was used. Linear light guides where each of these phosphor particulates were dispersed were used to perform the evaluation.

Also in the embodiment 5, as is the case with the embodiment 1, after comparing the illumination intensities depending on the presence and absence of the flexible resin sheet, it was learnt that the illumination intensities in the embodiment 5 according to the present invention using the flexible resin sheet were higher than those in the comparative example in any positions, thus enabling a sufficient illumination intensity to be ensured to a distant position from the light source.

### [Embodiment 6]

The linear light guides in the embodiment 1 were provided side by side to be allowed to adhere to each other to form a planar body. In addition, as the LED light source, a white LED element was used.

Also in the embodiment 6, as is the case with the embodiment 1, after comparing the illumination intensities depending on the presence and absence of the flexible resin sheet, it was learnt that the illumination intensities in the embodiment 6 according to the present invention using the flexible resin sheet were higher than those in the comparative example in any positions, thus enabling a sufficient illumination intensity to be ensured to a distant position from the light source.

### [Embodiment 7]

The linear light guides in the embodiment 1 were provided side by side to be allowed to adhere to each other to form a planar body. Further, flexible resin sheets with a depressed portion were arranged on backsides and then the side emission type optical fibers were arranged along the depressed portions. In addition, as the LED light source, the white LEDs were used.

Also in the embodiment 7, as is the case with the embodiment 1, after comparing the illumination intensities depending on the presence and absence of the flexible resin sheet, it was learnt that the illumination intensities in the embodiment 7 according to the present invention using the flexible resin sheet were higher than those in the comparative example in any positions, thus enabling the planar luminescent body whose illumination intensity was high in any positions to be obtained.

### [Embodiment 8]

A figure was pictured using the linear light guides in the embodiment 3 and the planar light guide structure in the embodiment 7.

Also in the embodiment 8, as is the case with the embodiment 1, after comparing the illumination intensities depending on the presence and absence of the flexible resin sheet, it was learnt that the illumination intensities in the embodiment 8 according to the present invention using the flexible resin sheet were more luminous than those in the comparative example in any positions, thus enabling the illuminating device which pictured the figure high in illumination intensity in any positions to be obtained.

As above, the embodiments according to the present invention have been described with reference to accompanying drawings. The technical scope in the present invention is not governed by the above-mentioned embodiments. It is obvious that those skilled in the art can easily make various altered embodiments and modifications within the scope of the technical idea described in the claims. These embodiments and modifications are considered to be justifiably involved in the technical scope of the present invention.

It goes without saying that each scheme in each modification can be, e.g., combined together.

### [Reference Sign List]

1,1a, 1b, 1c, 1d, 1e, If, 1g, 1h··········linear light guide
2a·········core
2b·········clad
3, 3a, 3b·········side emission type optical fiber
4·········sidle emission type optical fiber strands
5, 5a········flexible resin sheet
7·········covered section
9·········opened section
10·········linear light guide structure
11, 11a·········rod body
20, 20a·········planar light guide structure
21·········depressed portion
30, 30a, 30b, 30c·········illuminating device
31·········light source
33·········reflective coating
35·········lens

## Claims

1. A linear light guide comprising:
a covered section formed by covering part of a circumferential length on an outer circumferential surface of a side emission type optical fiber with a light reflecting flexible resin sheet, and
an opened section not covered with the flexible resin sheet to expose the outer circumferential surface of the side emission type optical fiber.

2. The linear light guide according to claim 1, wherein the side emission type optical fiber is a side emission type multi-core optical fiber.

3. The linear light guide according to claim 1 or 2, wherein the covered section and the opened section are parallel and continuously formed in a longitudinal direction of the side emission type optical fiber.

4. The linear light guide according to any of claims 1 to 3, wherein the covered section is formed in a half or more of the circumferential length on an outer circumference of the side emission type optical fiber, and a circumferential opening width of the opened section is formed in a half or less of the circumferential length on the outer circumference of the side emission type optical fiber.

5. The linear light guide according to any of claims 1 to 4, wherein the flexible resin sheet is spirally wound around the outer circumferential surface of the side emission type optical fiber so as to form gaps at predetermined intervals on the outer circumferential surface of the side emission type optical fiber, and both the opened section and the covered section are spirally, alternately and continuously formed in the longitudinal direction of the side emission type optical fiber.

6. A linear light guide comprising:
a light reflecting flexible resin sheet,
a transparent rod body,
a side emission type optical fiber, the side emission type optical fiber being spirally wound around the transparent rod body so that the side emission type optical fiber is allowed to be in close contact with the transparent rod body to form a structure,
wherein the structure is provided with a covered section formed by covering part of a circumferential length of the structure with the light reflecting flexible resin sheet, and an opened section not covered with the light reflecting flexible resin sheet to expose an outer circumferential surface of the structure.

7. The linear light guide according to claim 6, wherein the flexible resin sheet is spirally wound around the outer circumferential surface of the structure so as to form gaps at predetermined intervals on the outer circumferential surface of the structure and both the opened section and the covered section are spirally, alternately and continuously formed in a longitudinal direction of the transparent rod body.

8. The linear light guide according to any of claims 1 to 7, wherein at least part of contact portions between the flexible resin sheet and the side emission type optical fiber is allowed to adhere to each other by a light transmissive adhesive agent or is filled with light transmissive oil.

9. The linear light guide according to any of claims 1 to 8, wherein a core material of the side emission type optical fiber is any one of PMMA-based resin, polycarbonate resin, modified PC resin, norbornane resin, or copolymerized PMMA resin that is a copolymer resin of PMMA resin and isopropyl alcohol resin, while a clad material of the side emission type optical fiber is fluorine resin.

10. The linear light guide according to any of claims 1 to 9, wherein the core material of the side emission type optical fiber is silica-based glass, while the clad material of the side emission type optical fiber is fluorine resin or silica-based glass.

11. The linear light guide according to any of claims 1 to 10, wherein the flexible resin sheet is a thermoplastic microcellular structure resin sheet made of any one of PET resin containing a fine foam, PC resin, flame retardant PC resin, or acryl resin.

12. The linear light guide according to any of claims 1 to 11, wherein the flexible resin sheet is produced by stretching a resin sheet containing at least inorganic particles in polyester or a resin sheet containing resin incompatible with polyester and is a film like resin sheet containing fine foams inside itself.

13. The linear light guide according to any of claims to 12, wherein the side emission type optical fiber is one where phosphor particulates of any one of blue phosphor particulates, green phosphor, particulates, yellow phosphor particulates, or red phosphor particulates are dispersed in the core or clad of the side emission type optical fiber.

14. A linear light guide structure comprising:
a flexible soft resin or rubber case,
a linear light guide according to any of claims 1 to 13, the linear light guide being housed in the flexible soft resin or the rubber case.

15. A planar light guide structure comprising:
a plurality of the linear light guides according to any of claims 1 to 14, the linear light guides being allowed to adhere to each other to form a planar body, and
an opened section, the opened section being formed in each of the plurality of the linear light guides to be allowed to face uniformly in a normal direction of the planar body.

16. A planar light guide structure comprising:
a plurality of the linear light guides according to any of claims 1 to 15, side emission type optical fibers in the plurality of the linear light guides being provided side by side, and
a flexible resin sheet, and
a plurality of depressed portions, the depressed portions corresponding to a plurality of the side emission type optical fibers being formed in the flexible resin sheet to arrange the side emission type optical fibers in the depressed portions in the flexible resin sheet.

17. An illuminating device comprising:
the linear light guide structure according to any of claims 14 to 16, the linear light guide structure being mainly made up of side emission type optical fiber, and
a light source, the light source being operated to allow predetermined-wavelength light to enter at least one end face in a longitudinal direction of the side emission type optical fiber in the linear light guide structure in conformity to an optical axis of the side emission type optical fiber, and then to be extracted from the opened section.

18. An illuminating device comprising:
a linear light guide according to any of claims 1 to 17, the linear light guide structure being mainly made up of side emission type optical fiber, and
a light source, the light source being operated to allow predetermined wavelength light to enter at least one end in a longitudinal direction of the side emission type optical fiber in the linear light guide structure in conformity to an optical axis of the side emission type optical fiber and then to be extracted the light from the opened section.

19. The illuminating device according to claim 17 or 18, wherein the end face of the side emission type optical fiber and the light source are allowed to contact with each other to be optically connected directly with each other.

20. The illuminating device according to any of claims 17 to 19, wherein a lens is arranged between the end face of the side emission type optical fiber and the light source to allow the side emission type optical fiber and the light source to be optically connected with each other via the lens.

21. The illuminating device according to any one of claims 17 to 20, wherein the illuminating device is an illuminating device for ornamental use, for a visible guide sign or for an automobile interior.
